# EUROPÄISCHE PATENTSCHRIFT

(11) **EP 1 563 346 B1**
(45) Veröffentlichungstag und Bekanntmachung des Hinweises auf die Patenterteilung: **02.09.2009**
(21) Anmeldenummer: 03788795.7
(22) Anmeldetag: 11.11.2003
(51) Int. Cl.: G03H 1/22

(54) **EINRICHTUNG ZUR REKONSTRUKTION VON VIDEOHOLOGRAMMEN**
DEVICE FOR RECONSTRUCTING VIDEO HOLOGRAMS
DISPOSITIF DE RECONSTRUCTION D'HOLOGRAMMES VIDEO

(30) Priorität: 13.11.2002 DE 10253292
(43) Veröffentlichungstag der Anmeldung: 17.08.2005
(73) Patentinhaber: SeeReal Technologies GmbH, 01307 Dresden (DE)
(72) Erfinder: SCHWERDTNER, Armin, 01259 Dresden (DE)
(86) Internationale Anmeldenummer: PCT/DE2003/003791
(87) Internationale Veröffentlichungsnummer: WO 2004/044659

(56) Entgegenhaltungen:
- WO-A-99/00993
- GB-A- 2 363 273
- US-A- 5 798 864
- US-A- 5 889 599
- MISHINA T ET AL: "Combination enlargement method of viewing zone for computer-generated holography" PRACTICAL HOLOGRAPHY XIV AND HOLOGRAPHIC MATERIALS VI, SAN JOSE, CA, USA, 24-25 JAN. 2000, Bd. 3956, Seiten 184-192, XP002278763 Proceedings of the SPIE - The International Society for Optical Engineering, 2000, SPIE-Int. Soc. Opt. Eng, USA ISSN: 0277-786X
- MISHINA T ET AL: "VIEWING-ZONE ENLARGEMENT METHOD FOR SAMPLED HOLOGRAM THAT USES HIGH-ORDER DIFFRACTION" APPLIED OPTICS, OPTICAL SOCIETY OF AMERICA,WASHINGTON, US, Bd. 41, Nr. 8, 10. März 2002 (2002-03-10), Seiten 1489-1499, XP001102391 ISSN: 0003-6935
- MEANO K ET AL: "ELECTRO-HOLOGRAPHIC DISPLAY USING 15MEGA PIXELS LCD" PROCEEDINGS OF THE SPIE, SPIE, BELLINGHAM, VA, US, Bd. 2652, 1996, Seiten 15-23, XP000923279 ISSN: 0277-786X
- FUKAYA N; MAENO K; NISHIKAWA O; MATSUMOTO K; SATO K; HONDA T: "Expansion of the image size and viewing zone in holographic display using liquid crystal devices" PROCEEDINGS OF THE SPIE - THE INTERNATIONAL SOCIETY FOR OPTICAL ENGINEERING, Bd. 2406, 1995, Seiten 283-289, XP002363132
- FUKAYA N; ET AL: "EYE-POSITION TRACKING TYPE ELECTRO-HOLOGRAPHIC DISPLAY USING LIQUIDCRYSTAL DEVICES" ASIA DISPLAY, XX, XX, 1995, Seiten 963-964, XP002940561
- BROWN B R; LOHMANN A W: "Computer-generated binary holograms" IBM JOURNAL OF RESEARCH AND DEVELOPMENT, Bd. 13, Nr. 2, März 1969 (1969-03), Seiten 160-168, XP009096963
- ONOE M; KANEKO M: "CHARACTERISTICS OF THREE-DIMENSIONAL RECONSTRUCTED IMAGES FROM A COMPUTER GENERATED HOLOGRAM" ELECTRONICS AND COMMUNICATIONS IN JAPAN, Bd. 62-C, Nr. 11, November 1979 (1979-11), Seiten 101-107, XP009066284
- CAMERON C D; ET AL: "COMPUTATIONAL CHALLENGES OF EMERGING NOVEL TRUE 3D HOLOGRAPHIC DISPLAYS" PROCEEDINGS OF THE SPIE, Bd. 4109, 31. Juli 2000 (2000-07-31), Seiten 129-140, XP008000305
- GOODMAN J.W.: "introduction to Fourier optics" 1996, MC GRAW HILL * Seiten 118-119 *
- STIJNS ERIK: "Basic demonstrations in diffractive and Fourier optics" SPIE, 19. August 1997 (1997-08-19), Seiten 368-378, XP001097758

## Beschreibung

Die Erfindung betrifft eine Einrichtung zur Rekonstruktion einer dreidimensionalen Szene gemäß dem Oberbegriff des Anspruchs 1 und ein Verfahren zur Rekonstruktion einer dreidimensionalen Szene.

Es sind Einrichtungen zur Rekonstruktion von Videohologrammen mit akustooptischen Modulatoren (AOM) bekannt (Stephen A. Benton, Joel S. Kollin: Three dimensional display system, US 5,172,251). Diese akustooptischen Modulatoren wandeln elektrische Signale in optische Wellenfronten um, die dann durch Ablenkspiegel zu zweidimensionalen holografischen Flächen innerhalb eines Videoframes zusammengesetzt werden. Die Wellenfronten werden über weitere optische Elemente als eine für den Betrachter sichtbare Szene rekonstruiert. Die verwendeten optischen Mittel, wie Linsen und Ablenkelemente, haben die Ausdehnung der rekonstruierten Szenen und sind mit ihrer großen Bautiefe voluminös und schwer. Sie lassen sich kaum miniaturisieren und sind daher in ihrem Anwendungsbereich beschränkt.

Eine andere Möglichkeit, grosse Videohologramme zu erzeugen, bietet das sogenannte Tiling-Verfahren mit Computer Generierten Hologrammen (CGH). Nach diesem aus WO 00/75698 A1 und US 6,437,919 B1 bekannten Verfahren werden kleine CGHs mit kleinem Pitch über eine Abbildungsoptik zusammengesetzt. Dafür werden in einem ersten Schritt schnelle Matrizen mit kleinem Pitch (in der Regel EASLM: Electronisch Adressierbare Spatiale Licht-Modulatoren) mit der nötigen Information beschrieben, auf ein holografisch geeignetes Medium abgebildet und zu einem größeren Videohologramm zusammengesetzt. Das verwendete Medium ist in der Regel ein Optisch Adressierbarer Spatialer Licht-Modulator (OASLM). In einem zweiten Schritt wird das zusammengesetzte Videohologramm mit kohärentem Licht in Transmission oder Reflexion rekonstruiert.

Bei den beispielsweise aus WO 01/95016 A1 oder Fukaya u.a. "Eye-position tracking type electro-holographic display using liquid crystal devices", Proceedings of EOS Topical meeting on Diffractive Optics, 1997, bekannt gewordenen CGH mit matrixförmigen oder auf andere Weise regulär angeordneten steuerbaren Öffnungen wird die Beugung an kleinen Öffnungen für die Kodierung der Szenen angewendet. Die von den Öffnungen ausgehenden Wellenfronten konvergieren in Objektpunkten der dreidimensionalen Szene, bevor sie den Betrachter erreichen. Je kleiner der Pitch und damit die Grösse der Öffnungen in den CGH ist, umso grösser ist der Beugungswinkel, also der Betrachterwinkel. Eine Vergrösserung des Betrachterwinkels bedeutet bei diesen bekannten Verfahren daher eine Vergrösserung der Auflösung.

Eine Einrichtung zur Rekonstruktion einer dreidimensionalen Szene gemäß dem Oberbegriff des Anspruchs 1 ist beispielsweise aus der US 5,889,599 bekannt.

Bei Fourierhologrammen findet bekanntlich die Rekonstruktion in eine Ebene als direkte oder inverse Fouriertransformierte des Hologramms statt. Diese Rekonstruierte setzt sich periodisch mit einem Periodizitätsintervall fort, dessen Ausdehnung umgekehrt proportional zum Pitch im Hologramm ist.
Wenn die Ausdehnung der Rekonstruierten des Fourierhologramms grösser als das Periodizitätsintervall ist, überlappen sich benachbarte Beugungsordnungen. Mit zunehmender Verringerung der Auflösung, also wachsendem Pitch der Öffnungen, werden die Ränder der Rekonstruierten durch Überlappung aus den höheren Beugungsordnungen zunehmend gestört. Die nutzbare Rekonstruktion wird dadurch in ihrer Ausdehnung mehr und mehr eingeschränkt.
Will man größere Periodizätsintervalle und damit also grössere Betrachterwinkel erzielen, nähert sich der erforderliche Pitch im Hologramm der Lichtwellenlänge. Um dann möglichst große Szenen darstellen zu können, müssen aber auch die CGH entsprechend groß sein. Beide Forderungen verlangen ein großes CGH mit sehr vielen Öffnungen, das in Form von Displays mit steuerbaren Öffnungen gegenwärtig nicht realisierbar ist (s. EP 0 992 163B1). CGH mit steuerbaren Öffnungen sind daher nur ein oder wenige Zoll gross, wobei die Pitches noch erheblich über 1 µm liegen.

Beide Parameter, Pitch und Hologrammgrösse, werden durch das sogenannte Space-Bandwith-Produkt (SBP) als Anzahl der Öffnungen im Hologramm beschrieben. Soll die Rekonstruktion von einem CGH mit steuerbaren Öffnungen mit 50 cm Breite so erfolgen, dass ein Betrachter die Szene im Abstand von 1 m innerhalb eines horizontalen Betrachterfensters von 50 cm sehen kann, beträgt das SPB in horizontaler Richtung etwa 0,5*10⁶. Dem entsprechen im CGH 500.000 steuerbare Öffnungen mit einem Abstand von 1 µm. Bei einem Aspekt-Verhältnis von 4:3 ergeben sich in vertikaler Richtung entsprechend 375.000 Öffnungen. Das CGH enthält somit 3,75*10¹¹ Öffnungen, wenn man drei Farbsubpixel berücksichtigt. Diese Zahl verdreifacht sich noch, wenn man bedenkt, dass im CGH mit steuerbaren Öffnungen meist nur Amplituden beeinflusst werden können. Die Phasenkodierung erfolgt dann über den sogenannten Detourphasen-Effekt, wofür mindestens drei äquidistante Öffnungen je Abtastpunkt erforderlich sind. SLM mit so vielen steuerbaren Öffnungen sind derzeit nicht bekannt.

Die Hologrammwerte müssen aus den zu rekonstruierenden Szenen berechnet werden. Bei einer Farbtiefe von 1 Byte für jede der drei Grundfarben und einer Frame-Rate von 50 Hz benötigt ein CGH einen Informationsfluss von 50*10¹² = 0,5*10¹⁴ Byte/s. Fouriertransformationen von Datenströmen dieser Grösse übersteigen die Leistung derzeit einsetzbarer Rechner bei weitem und schliessen eine Hologramm-Berechnung auf Basis lokaler Rechner aus. Aber auch eine Übertragung dieser Informationsmenge über Datennetze ist für den normalen Nutzer gegenwärtig nicht realisierbar.

Um die umfangreichen Rechenvorgänge zu verringern, wird beispielsweise auch vorgeschlagen, das Hologramm nicht vollständig zu berechnen, sondern nur in den Teilen, die direkt vom Betrachter eingesehen werden können oder die sich ändern. In der oben schon genannten Patentschrift WO 01/95016 A1 wird ein solches Hologramm beschrieben, das aus adressierbaren Subregionen besteht, wie etwa das genannte Tiling-Hologramm. Ausgangspunkt der Berechnungen ist eine sogenannte effektive Austrittspupille, die mit der Augenpupille des Betrachters in der jeweiligen Position zusammenfallen kann. Die Nachführung des Bildes bei einer Veränderung der Betrachterposition erfolgt durch ständige Neuberechnung des Hologrammteiles, der das Bild für die neue Betrachterposition erzeugt. Dadurch wird aber die Senkung des Rechenaufwandes zum Teil wieder zunichte gemacht.

Die Nachteile der bekannten Verfahren bestehen zusammengefasst darin, dass die Anordnungen mit akusto-optischen Modulatoren zu voluminös sind und nicht auf heutige aus der Flachbildschirmtechnik bekannte Abmessungen reduziert werden können, dass die Videohologramme nach dem Tiling-Verfahren zweistufige Verfahren mit grossem technologischen Aufwand sind, die sich schwerlich auf Desktop-Grösse reduzieren lassen und dass schließlich die Anordnungen auf der Basis von SLM mit steuerbaren Öffnungen zu klein sind, um grosse Szenen rekonstruieren zu können. Dazu fehlen momentan steuerbare grosse SLM mit extrem kleinen Pitches sowie die erforderlichen Rechenleistungen und die erforderliche hohe Bandbreite der Netzwerke.

Der Erfindung liegt die Aufgabe zugrunde, die angeführten Nachteile zu umgehen und ausgedehnte Videodarstellungen von Hologrammen in Echtzeit und für grosse Betrachterwinkel zu ermöglichen.

Diese Aufgabe wird erfindungsgemäß mit den im Patentanspruch 1 aufgeführten Merkmalen gelöst. Vorteilhafte Ausgestaltungen der Erfindung sind in den Patentansprüchen 2 bis 11 angegeben.

Die Videohologramme und Einrichtungen zur Rekonstruktion von Videohologrammen mit steuerbaren Öffnungen sehen vor, dass in der Betrachterebene mindestens ein Betrachterfenster in einem Periodizitätsintervall als direkte oder inverse Fouriertransformierte des Videohologramms gebildet wird, durch das hindurch ein Betrachter eine dreidimensionale Szene als Rekonstruktion sehen kann. Die Ausdehnung des Betrachterfensters entspricht maximal dem Periodizitätsintervall in der Ebene der Fourier-Rücktransformation am Ort des Lichtquellenbildes. Das Betrachterfenster spannt zusammen mit dem Hologramm einen Kegelstumpf auf, der die gesamte dreidimensionale Szene als Fresnel-Transformierte des Videohologramms enthält.
Ein Betrachterfenster ist in Ausbildung der Erfindung in etwa auf ein Auge oder auf einen anderen geeigneten Bereich begrenzt und positioniert, wobei dem anderen Auge des Betrachters analog ein zweites Betrachterfenster zugeordnet wird. Das erfolgt dadurch, dass die betrachtete Lichtquelle entsprechend versetzt oder durch Zuschalten einer zweiten reellen oder virtuellen, hinreichend kohärenten Lichtquelle an einem anderen geeigneten Ort zu einem Lichtquellenpaar im optischen System ergänzt wird. Auf diese Weise wird die beidäugige Betrachtung der dreidimensionalen Szene durch zwei zugehörige Betrachterfenster ermöglicht. Dabei kann der Inhalt des Videohologramms synchron mit dem Zuschalten des zweiten Betrachterfensters entsprechend der Augenposition geändert, d.h. umkodiert werden. Bei mehreren Betrachtern können so durch Zuschalten weiterer Lichtquellen entsprechend viele Betrachterfenster erzeugt werden.
Für die Einrichtung zur Rekonstruktion eines Videohologramms besteht ein anderer wesentlicher Erfindungsgedanke darin, das optische System und das Videohologramm so anzuordnen, dass die höheren Beugungsordnungen des Videohologramms für das erste Betrachterfenster eine Nullstelle bzw. ein Intensitätsminimum am Ort des zweiten Betrachterfensters aufweisen. Damit wird ein Übersprechen eines Betrachterfensters für ein Auge auf das andere Auge eines Betrachters oder auf andere Betrachter verhindert. Der Intensitätsabfall des Lichts zu höheren Beugungsordnungen hin aufgrund der endlichen Breite der Öffnungen des Videohologramms oder/und der Minima des Intensitätsverlaufs wird so vorteilhaft ausgenutzt. Bei zum Beispiel rechteckigen Öffnungen entsteht als Intensitätsverlauf eine sinc²-Funktion, die schnell abfällt und eine mit grösser werdenden Abständen abnehmende sin²-Funktion darstellt.
Für das Videohologramm sind nur so viele Werte zu berechnen, wie das Display Öffnungen hat. Auf die gleiche Anzahl von Werten ist die Übertragung der Daten vom Computer oder vom Netz auf das Display als Hologramm beschränkt. Der Datenstrom unterscheidet sich daher praktisch nicht von dem heute schon durch die übliche Displaytechnik zu verarbeitenden Datenstrom. Das soll anhand eines Beispiels verdeutlicht werden.
Reduziert man das Betrachterfenster durch Wahl eines hinreichend grob auflösenden Displays beispielsweise von horizontal 50 cm und vertikal 37,5 cm auf 1 cm x 1 cm, so entspricht das einer Reduzierung der Anzahl der Öffnungen im Hologramm auf 1/1875. In gleicher Weise wird bei einem Transfer über ein Netzwerk die erforderliche Bandbreite reduziert. Bei den nach bekannten Verfahren hergestellten Videohologrammen mit erforderlichen 10¹² Öffnungen reduzieren sich diese im Beispiel auf etwa 5*10⁸ Pixel. Durch das verbleibende Betrachterfenster kann die Szene vollständig betrachtet werden. Diese Anforderungen an Pitch und Hologrammgrösse entsprechend dem Space-Bandwith-Produkt können heute verfügbare Displays bereits erfüllen. Damit können auf kostengünstige Weise grosse Echtzeit-Videohologramme auf Displays mit großem Pitch für einen großen Betrachterbereich realisiert werden.
Die Nachführung des Betrachterfensters (Tracking) wird durch mechanischen oder elektronischen Versatz der Lichtquellen, durch bewegliche Spiegel oder von auf andere geeignete Weise positionierbare Lichtquellen realisiert. Mit dem Verschieben der Lichtquellenbilder verschieben sich auch die Betrachterfenster. Bewegt sich der Betrachter, wird/werden die Lichtquelle/n so im Raum verschoben, dass die Betrachterfenster den Augen des Betrachters folgen. Dadurch wird gesichert, dass die Betrachter auch bei Bewegung die rekonstruierte dreidimensionale Szene sehen und andererseits ihre Bewegungsfreiheit nicht eingeschränkt ist. Für die Positionsdetektion der Betrachter sind verschiedene Systeme bekannt, die hier vorteilhaft einsetzbar sind, beispielsweise auf Magnetsensoren basierende.

Mit den erfindungsgemäßen Mitteln ist auch die farbige Rekonstruktion eines Videohologramms effektiv möglich. Dabei ist vorgesehen, dass die Rekonstruktion mit mindestens drei für die Grundfarben in Amplitude und/oder Phase steuerbaren Öffnungen je Zelle erfolgt, wobei die Kodierung für die Öffnungen für jede Grundfarbe separat vorgenommen wird. Eine andere Möglichkeit der farbigen Rekonstruktion eines Videohologramms besteht darin, wenigstens drei nacheinander ausgeführte Rekonstruktionen in den Grundfarben auf der Grundlage der erfindungsgemäßen Einrichtung durchzuführen.

Mit der vorliegenden Erfindung können vorteilhafterweise holografische Darstellungen von ausgedehnten räumlichen Szenen mittels steuerbarer Displays, wie TFT-Flachdisplays, in Echtzeit und für grosse Betrachterwinkel erzeugt werden. Diese Videohologramme sind vorteilhafterweise im Fernseh-, Multimedia-, Spiele- und Konstruktionsbereich, in der Militär- und in der Medizintechnik und in anderen Bereichen von Wirtschaft und Gesellschaft anwendbar. Die dreidimensionalen Szenen können computergeneriert oder auf andere Weise erzeugt werden.

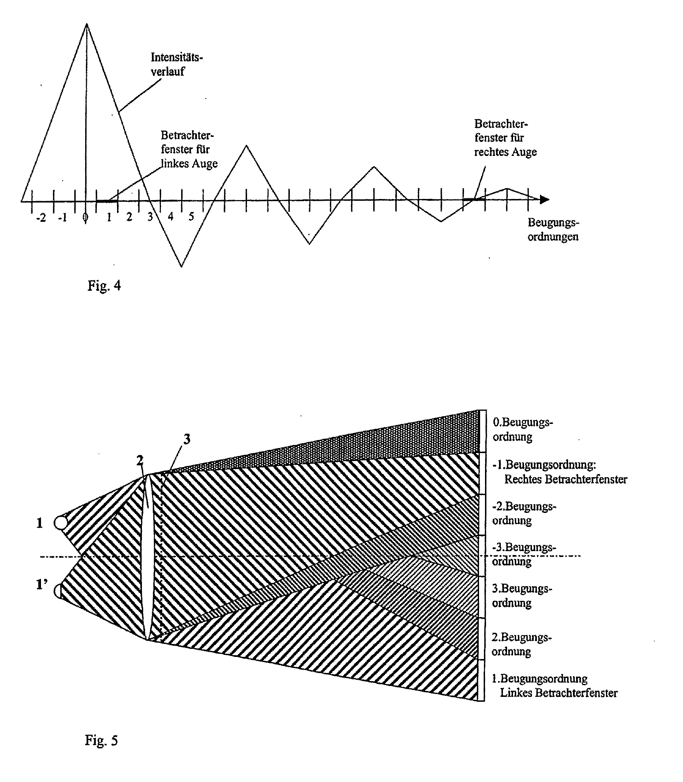

Ein Ausführungsbeispiel der Erfindung ist in der Figur 5 dargestellt und wird im folgenden näher beschrieben.

Es zeigen
- Fig. 1: eine prinzipielle Darstellung eines Videohologramms und einer Einrichtung zur Rekonstruktion von Videohologrammen mit der Entstehung der Beugungsordnungen und der Lage eines Betrachterfensters,
- Fig. 2: eine prinzipielle Darstellung einer Einrichtung zur Rekonstruktion von Videohologrammen mit einer dreidimensionalen Szene, die durch ein Betrachterfenster hindurch betrachtet werden kann,
- Fig. 3: eine prinzipielle Darstellung einer Einrichtung zur Rekonstruktion von Videohologrammen mit der Kodierung der dreidimensionalen Szene in einem Teil des Videohologramms, so dass die Beugungsordnungen nicht überlappen,
- Fig. 4: einen Intensitätsverlauf des Lichtes in der Betrachterebene in Abhängigkeit von den Beugungsordnungen und
- Fig. 5: eine prinzipielle Darstellung einer erfindungsgemäßen Einrichtung zur Rekonstruktion von Videohologrammen mit der Lage der Betrachterfenster für beide Augen eines Betrachters hinsichtlich der Beugungsordnungen zur Vermeidung von Übersprechen.

Eine Einrichtung zur Rekonstruktion von Videohologrammen besteht aus dem Videohologramm, einer hinreichend kohärenten reellen oder virtuellen punkt- oder linienförmigen Lichtquelle und aus einem optischen System. Das Videohologramm selbst setzt sich aus matrixförmig oder in anderer Weise regulär angeordneten Zellen zusammen, die mindestens eine in Amplitude und/oder Phase steuerbare Öffnung je Zelle enthalten. Das optische System zur Rekonstruktion des Videohologramms lässt sich in bekannter Weise z.B. einfach durch ein optisches Abbildungssystem, bestehend aus einem punkt- oder linienförmigen Laser und einer hinreichend kohärenten Lichtquelle realisieren.

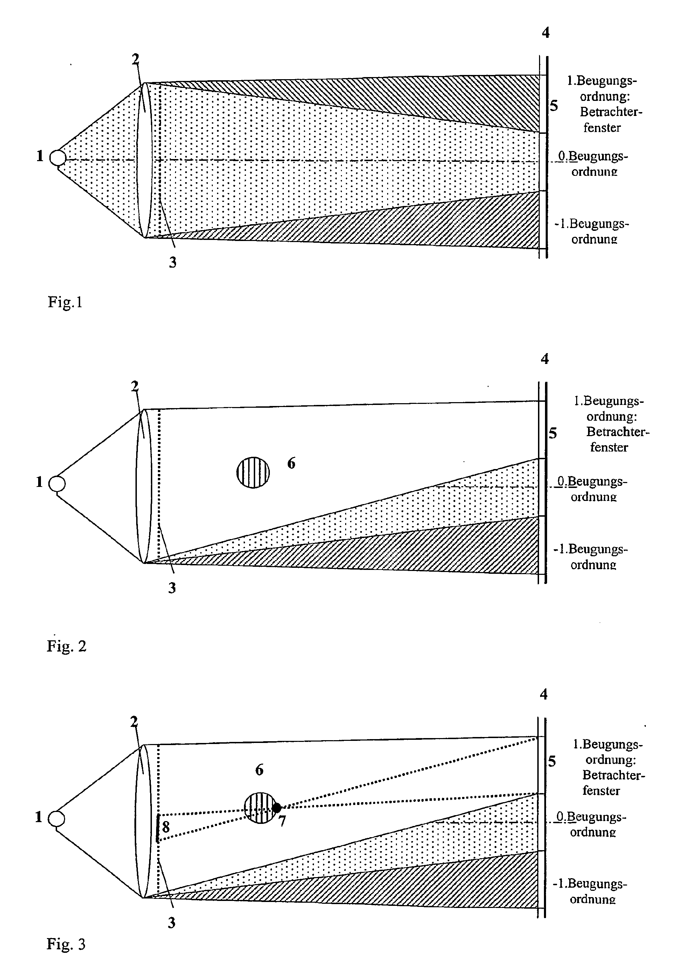

Die grundsätzliche Anordnung von Videohologramm und Rekonstruktion zeigt Fig. 1. In Lichtrichtung sind hintereinander eine Lichtquelle 1, eine Linse 2, ein Hologramm 3 und eine Betrachterebene 4 angeordnet. Der Betrachterebene 4 entspricht die Fourierebene der Rücktransformation des Videohologramms mit den Beugungsordnungen.

Die Lichtquelle 1 wird durch ein optisches System, repräsentiert durch die Linse 2, in die Betrachterebene 4 abgebildet. Setzt man ein Hologramm 3 ein, so wird es in der Betrachterebene 4 als Fourier-Rücktransformation dargestellt. Das Hologramm 3 mit periodischen Öffnungen erzeugt äquidistant fortgesetzte Beugungsordnungen in der Betrachterebene 4, wobei die holografische Kodierung, beispielsweise mittels des sogenannten Detourphasen-Effektes, in die höheren Beugungsordnungen erfolgt. Da die Intensität nach höheren Beugungsordnungen hin abnimmt, wird in der Regel die 1. oder die -1. Beugungsordnung als Betrachterfenster 5 gewählt. Wenn nicht ausdrücklich anders angegeben, wird zur Darlegung der Erfindung im weiteren von der 1. Beugungsordnung ausgegangen.

Die Ausdehnung der Rekonstruktion wurde hier so gewählt, dass sie in ihrer Größe mit dem Periodizitätsintervall der 1. Beugungsordnung in der Betrachterebene 4 übereinstimmt. Somit schliessen sich höhere Beugungsordnungen ohne Lücke, aber auch ohne Überlappung aneinander an.

Die ausgewählte 1. Beugungsordnung bildet zwar als Fouriertransformierte die Rekonstruierte des Hologramms 3, stellt aber nicht die eigentliche dreidimensionale Szene 6 dar. Sie dient nur als Betrachterfenster 5, durch das hindurch die dreidimensionale Szene 6 betrachtet werden kann (s. Fig. 2). Im Inneren des Lichtbündels der 1. Beugungsordnung ist die eigentliche dreidimensionale Szene 6 in Form eines Kreises angedeutet. Die Szene liegt also innerhalb des Rekonstruktionskegels, der vom Hologramm 3 und dem Betrachterfenster 5 aufgespannt wird. Die Szene entsteht als Fresnel-Transformierte des Hologramms, während das Betrachterfenster ein Teil der Fourier-Transformierten ist.

Die Fig. 3 zeigt dazu die holografische Kodierung. Die dreidimensionale Szene ist aus Punkten aufgebaut. Mit dem Betrachterfenster 5 als Basis und dem ausgewählten Punkt 7 in der Szene 6 als Spitze wird ein Kegel durch diesen Punkt hindurch verlängert auf das Hologramm 3 projiziert. Es entsteht ein Projektionsgebiet 8 im Videohologramm 3, in dem dieser Punkt holografisch kodiert wird. Zur Berechnung der Phasenwerte kann man die Weglängen vom betrachteten Punkt 7 zu den Zellen des Hologramms 3 bestimmen. Mit dieser Rekonstruktion wird die Grösse des Betrachterfensters 5 im Periodizitätsintervall eingehalten. Würde im Beispiel dagegen der betrachtete Punkt 7 im gesamten Hologramm 3 kodiert, wäre die Rekonstruierte über das Periodizitätsintervall hinaus ausgedehnt. Die Betrachterzonen aus benachbarten Beugungsordnungen würden sich überlappen, wobei der Betrachter eine periodische Fortsetzung des betrachteten Punktes 7 sehen würde. Eine so kodierte Oberfläche würde durch Mehrfachüberlagerungen in ihren Konturen verwaschen erscheinen.

Vorteilhafterweise wird der Intensitätsabfall zu höheren Beugungsordnungen hin zur Unterdrückung des Übersprechens auf andere Betrachterfenster genutzt. Die Fig. 4 zeigt dazu schematisch einen Intensitätsverlauf des Lichts über die Beugungsordnungen, der durch die Breite der Öffnungen im CGH entsteht. Auf der Abszisse sind die Beugungsordnungen aufgetragen. Die 1. Beugungsordnung stellt das Betrachterfenster 5 für das linke Auge, also das linke Betrachterfenster, dar, durch das die dreidimensionale Szene 6 betrachtet werden kann. Das Übersprechen in ein Betrachterfenster für das rechte Auge wird durch den Abfall der Intensität zu höheren Ordnungen und zusätzlich noch durch die Nullstelle der Intensitätsverteilung unterdrückt.

Der Betrachter kann die Szene 6 des Hologramms 3 natürlich auch mit beiden Augen betrachten (s. Fig. 5). Für das rechte Auge wurde als rechtes Betrachterfenster 5' die -1. Beugungsordnung zur Lichtquelle 1' gewählt. Wie aus der Zeichnung ersichtlich ist, spricht diese Intensität nur mit einem sehr geringen Wert auf das linke Auge über. Er entspricht hier der -6. Beugungsordnung.
Für das linke Auge wurde die 1. Beugungsordnung entsprechend der Lage der Lichtquelle 1 gewählt. Dort entsteht analog das linke Betrachtungsfenster 5. Erfindungsgemäss werden mit den zwei Lichtquellen 1 und 1' die entsprechenden dreidimensionalen Szenen 6 und 6' (hier nicht gezeigt) ortsfest bezüglich der Augen dargestellt. Dazu wird das Hologramm 3 beim Zuschalten der Lichtquellen 1 und 1' jeweils neu kodiert. Alternativ können die beiden Lichtquellen 1 und 1' gleichzeitig das Hologramm 3 an den beiden Betrachterfenstern 5 und 5' rekonstruieren.

Bewegt sich der Betrachter, werden die Lichtquellen 1 und 1' so nachgeführt, dass die beiden Betrachterfenster 5 und 5' auf den Augen des Betrachters lokalisiert bleiben. Dies gilt auch bei Bewegungen in der Normalen, also senkrecht zum Videohologramm.
Weiterhin können auch mehrere Betrachter eine dreidimensionale Szene betrachten, indem durch Zuschalten weiterer Lichtquellen zusätzliche Betrachterfenster entstehen.

## Patentansprüche

1. Einrichtung zur Rekonstruktion einer dreidimensionalen Szene mit einem optischen System, enthaltend mindestens eine reelle oder virtuelle punkt- oder linienförmige, hinreichend kohärente Lichtquelle (1) und eine Linse (2), sowie mit einem steuerbaren Display (3) aus matrixförmig oder in anderer Weise regulär angeordneten Zellen mit mindestens einer in Amplitude und/oder Phase steuerbaren Öffnung je Zelle, wobei in das steuerbare Display (3) ein Videohologramm kodierbar ist, wobei die Linse (2) ein Bild der Lichtquelle (1) in einer Betrachterebene (4) erzeugt, wobei in der Betrachterebene (4) ein Betrachterfenster (5) innerhalb einer Beugungsordnung des steuerbaren Displays (3) und nicht größer als diese Beugungsordnung des steuerbaren Displays (3) lokalisierbar ist, durch welches hindurch eine Rekonstruktion der dreidimensionalen Szene (6) mit einem Auge eines Betrachters betrachtbar ist, **dadurch gekennzeichnet, dass** dem anderen Auge des Betrachters ein zweites Betrachterfenster (5') in der Betrachterebene (4) zugeordnet ist, indem die Lichtquelle (1) versetzt wird oder eine zweite reelle oder virtuelle, hinreichend kohärente Lichtquelle (1') an einem anderen geeigneten Ort zu einem Lichtquellenpaar (1, 1') im optischen System zugeschaltet wird.

2. Einrichtung nach Patentanspruch 1, **dadurch gekennzeichnet, dass** das optische System und das steuerbare Display (3) so angeordnet sind, dass die höheren Beugungsordnungen des steuerbaren Displays (3) für das erste Betrachterfenster (5) eine Nullstelle bzw. ein Intensitätsminimum am Ort des zweiten Betrachterfensters (5') aufweisen.

3. Einrichtung nach Patentanspruch 2, **dadurch gekennzeichnet, dass** synchron mit dem Zuschalten des zweiten Betrachterfensters (5') das steuerbare Display (3) für das zweite Auge umkodierbar ist.

4. Einrichtung nach den Patentansprüchen 1 bis 3, **dadurch gekennzeichnet, dass** für mehrere Betrachter mehrere Lichtquellen zuschaltbar sind.

5. Einrichtung nach einem der Patentansprüche 1 bis 4, **dadurch gekennzeichnet, dass** die Lichtquellen durch mechanischen oder elektronischen Versatz oder durch bewegliche Spiegel positionierbar sind.

6. Einrichtung nach einem der Patentansprüche 1 bis 5, **dadurch gekennzeichnet, dass** die Information zur Bestimmung der Position der Lichtquellen von wenigstens einem Positionsgeber in Abhängigkeit von der Position des Betrachters oder der Betrachter geliefert wird.

7. Einrichtung nach Patentanspruch 1, **dadurch gekennzeichnet, dass** die farbige Rekonstruktion eines Videohologrammes mit einem steuerbaren Display (3) aus matrixförmig oder regulär angeordneten Zellen mit mindestens drei für die Grundfarben in Amplitude und/oder Phase steuerbaren Öffnungen je Zelle erfolgt, wobei die Kodierung für die Öffnungen für jede Grundfarbe separat erfolgt.

8. Einrichtung nach Patentanspruch 1, **dadurch gekennzeichnet, dass** die farbige Rekonstruktion durch wenigstens drei nacheinander ausgeführte Rekonstruktionen in den Grundfarben erfolgt.

9. Einrichtung nach Patentanspruch 1, **gekennzeichnet durch** Mittel zum Nachführen der Positionen von Betrachterfenstern, welche auf die Augen des Betrachters lokalisiert sind, **durch** mechanisches oder elektronischen Verschieben der Lichtquellen (1, 1'), um Augenbewegungen des Betrachters zu folgen.

10. Einrichtung nach Patentanspruch 1, **dadurch gekennzeichnet, dass** die dreidimensionale Szene (6) aus Punkten aufgebaut ist, für die das steuerbare Display (3) so kodiert ist, dass im steuerbaren Display (3) ein Projektionsgebiet (8) entsteht, in dem ein ausgewählter Punkt (7) der dreidimensionalen Szene (6) holographisch kodiert ist, und dass beim Rekonstruieren die Größe des Betrachterfensters (5) innerhalb der Beugungsordnung eingehalten wird, um mehrfach Überlagerungen durch benachbarte Beugungsordnungen zu vermeiden.

11. Einrichtung nach Patentanspruch 10, **dadurch gekennzeichnet, dass** das Projektionsgebiet (8) eine Projektion vom Betrachterfenster (5) als Basis durch den Punkt (7) hindurch zum steuerbaren Display (3) ist.

12. Verfahren zur Rekonstruktion einer dreidimensionalen Szene (6) unter Verwendung einer Einrichtung nach einem der Ansprüche 1 bis 11.

## Claims

1. Device for reconstructing a three-dimensional scene with an optical system, comprising at least one real or virtual point- or line-shaped sufficiently coherent light source (1) and a lens (2), and with a controllable display (3) comprising cells arranged in a matrix or in an otherwise regular manner with at least one opening per cell, the amplitude and/or phase of said opening being controllable, where a videohologram can be encoded into the controllable display (3), where the lens (2) generates an image of the light source (1) in a viewing plane (4), where a viewing window (5) can be located in the viewing plane (4) within a diffraction order of the controllable display (3) and not being larger than that diffraction order of the controllable display (3), through which a reconstruction of the three-dimensional scene (6) is visible with an eye of the viewer, **characterized in that** a second viewing window (5') in the viewing plane (4) is assigned to the other eye of the viewer, by displacing the light source (1) or by turning on a second real or virtual sufficiently coherent light source (1') at another suitable location to form a light source pair (1, 1') in the optical system.

2. Device according to claim 1, **characterized in that** the optical system and the controllable display (3) are arranged such that the higher diffraction orders of the controllable display (3) for the first viewing window (5) comprise a zero point or an intensity minimum at the location of the second viewing window (5'), respectively.

3. Device according to claim 2, **characterized in that** the controllable display (3) can be re-encoded for the second eye synchronously to turning on the second viewing window (5').

4. Device according to the claims 1 to 3, **characterized in that** multiple light sources can be turned on for multiple viewers.

5. Device according to one of the claims 1 to 4, **characterized in that** the light sources can be positioned by mechanical or electronic displacement or by movable mirrors.

6. Device according to one of the claims 1 to 5, **characterized in that** the information for the determination of the position of the light sources is provided by at least one position sensor depending on the position of the viewer or the viewers.

7. Device according to claim 1, **characterized in that** the colour reconstruction of a videohologram is achieved with a controllable display (3) comprising cells arranged in a matrix or in a regular manner with at least three openings per cell, the amplitude and/or phase of said openings being controllable for the primary colours, where the encoding for the openings is achieved separately for each primary colour.

8. Device according to claim 1, **characterized in that** the colour reconstruction is achieved by at least three subsequently performed reconstructions in the primary colours.

9. Device according to claim 1, **characterized by** means for tracking the positions of viewing windows, which are localized at the eyes of the viewer, by mechanical or electronic displacement of the light sources (1, 1'), in order to track eye movements of the viewer.

10. Device according to claim 1, **characterized in that** the three-dimensional scene (6) is composed of points, for which the controllable display (3) is encoded such that in the controllable display (3) a projection area (8) is created, in which a selected point (7) of the three-dimensional scene (6) is encoded holographically, and **in that** the size of the viewing window (5) is constrained within the diffraction order during reconstruction, to prevent multiple superpositions of neighbouring diffraction orders.

11. Device according to claim 10, **characterized in that** the projection area (8) is a projection from the viewing window (5) as a basis through the point (7) to the controllable display (3).

12. Method for reconstructing a three-dimensional scene (6) using a device according to one of the claims 1 to 11.

## Revendications

1. Dispositif pour la reconstruction d'une scène en trois dimensions, avec un système optique comprenant au moins une source de lumière (1) réelle ou virtuelle en forme de point ou de ligne et suffisamment cohérente, et une lentille (2), ainsi qu'avec un afficheur réglable (3), composé de cellules disposées en forme de matrice ou de façon régulière d'une autre manière, avec au moins un orifice par cellule, réglable en amplitude et/ou en phase, dans lequel un hologramme vidéo peut être codé dans l'afficheur réglable (3), dans lequel la lentille (2) génère une image de la source de lumière (1) dans un plan d'observateur (4), dans lequel une fenêtre d'observateur (5) peut être localisée dans le plan d'observateur (4), comprise dans un ordre de diffraction de l'afficheur réglable (3) et sans être supérieure à cet ordre de diffraction de l'afficheur réglable (3), fenêtre à travers laquelle une reconstruction de la scène en trois dimensions (6) peut être observée par un oeil d'un observateur, **caractérisé en ce qu'**à l'autre oeil de l'observateur, une deuxième fenêtre d'observateur (5') dans le plan d'observateur (4) est attribuée, **en ce que** la source de lumière (1) est décalée ou une deuxième source de lumière (1') réelle ou virtuelle, suffisamment cohérente, est mise en circuit à un autre endroit approprié pour former une paire de sources de lumière (1, 1') dans le système optique.

2. Dispositif selon la revendication 1, **caractérisé en ce que** le système optique et l'afficheur réglable (3) sont disposés de telle sorte que les ordres de diffraction supérieurs de l'afficheur réglable (3) présentent pour la première fenêtre d'observateur (5) un zéro ou un minimum d'intensité à l'emplacement de la deuxième fenêtre d'observateur (5').

3. Dispositif selon la revendication 2, **caractérisé en ce qu'**en synchronisme avec la mise en circuit de la deuxième fenêtre d'observateur (5'), l'afficheur réglable (3) peut être transcodé pour le deuxième oeil.

4. Dispositif selon les revendications 1 à 3, **caractérisé en ce que** plusieurs sources de lumière peuvent être mises en circuit pour plusieurs observateurs.

5. Dispositif selon l'une quelconque des revendications 1 à 4, **caractérisé en ce que** les sources de lumière peuvent être positionnées par décalage mécanique ou électronique ou par des miroirs mobiles.

6. Dispositif selon l'une quelconque des revendications 1 à 5, **caractérisé en ce que** les informations pour la détermination de la position des sources de lumière sont fournies par au moins un générateur de position en fonction de la position de l'observateur ou des observateurs.

7. Dispositif selon la revendication 1, **caractérisé en ce que** la reconstruction en couleur d'un hologramme vidéo avec un afficheur réglable (3), composé de cellules disposées en forme de matrice ou de façon régulière, s'effectue avec au moins trois orifices par cellule, réglables en amplitude et/ou en phase pour les couleurs primaires, dans lequel le codage s'effectue séparément pour les orifices pour chaque couleur primaire.

8. Dispositif selon la revendication 1, **caractérisé en ce que** la reconstruction en couleur s'effectue par au moins trois reconstructions réalisées l'une après l'autre dans les couleurs primaires.

9. Dispositif selon la revendication 1, **caractérisé par** des moyens pour le suivi des positions de fenêtres d'observateur, qui sont localisées sur les yeux de l'observateur, par un décalage mécanique ou électronique des sources de lumière (1, 1') afin de suivre les mouvements oculaires de l'observateur.

10. Dispositif selon la revendication 1, **caractérisé en ce que** la scène en trois dimensions (6) se compose de points pour lesquels l'afficheur réglable (3) est codé de telle sorte que sur l'afficheur réglable (3), une région de projection (8) se crée, dans laquelle un point sélectionné (7) de la scène en trois dimensions (6) est codé de façon holographique, et **en ce que** lors de la reconstruction la dimension de la fenêtre d'observateur (5) comprises dans l'ordre de diffraction est respectée afin d'éviter des recouvrements multiples dus à des ordres de diffraction adjacents.

11. Dispositif selon la revendication 10, **caractérisé en ce que** la région de projection (8) est une projection allant de la fenêtre d'observateur (5) en tant que base jusqu'à l'afficheur réglable (3) en passant par le point (7).

12. Procédé de reconstruction d'une scène en trois dimensions (6) utilisant un dispositif selon l'une quelconque des revendications 1 à 11.
